Europäisches Patentamt

European Patent Office

Office européen des brevets

(11) Veröffentlichungsnummer: **0 496 231 A2**

# EUROPÄISCHE PATENTANMELDUNG

(21) Anmeldenummer: **92100400.8**

(22) Anmeldetag: **13.01.92**

(51) Int. Cl.5: **B23K 9/235**, B23K 26/00

(30) Priorität: **24.01.91 DE 4101988**
**27.05.91 DE 4117263**

(43) Veröffentlichungstag der Anmeldung:
**29.07.92 Patentblatt 92/31**

(84) Benannte Vertragsstaaten:
**AT BE CH DE DK ES FR GB GR IT LI NL SE**

(71) Anmelder: **kabelmetal electro GmbH**
**Kabelkamp 20 Postfach 260**
**W-3000 Hannover 1(DE)**

(72) Erfinder: **Ziemek, Gerhard, Dr.**
**Bunzlauer Strasse 6**
**W-3012 Langenhagen(DE)**
Erfinder: **Klebl, Wolfram**
**Sieversdamm 2b**
**W-3004 Isernhagen 4(DE)**
Erfinder: **Staschewski, Harry**
**Werlhofstrasse 23**
**W-3012 Langenhagen(DE)**

(54) Verfahren zum Herstellen längsnahtgeschweisster Rohre.

(57) Bei einem Verfahren zum Herstellen längsnaht-geschweißter Metallrohre wird ein Metallband von einer Vorratsspule abgezogen und allmählich zu einem Schlitzrohr geformt und das Schlitzrohr verschweißt. Es wird ein an seinen Längskanten besäumtes gefettetes Metallband eingesetzt und zumindest die einander gegenüberliegenden Bandkantenbereiche werden vor dem Verschweißen auf eine solche Temperatur erhitzt, daß das Fett an der Bandoberfläche verdampft. Zum Erhitzen der Bandkanten wird eine Lasereinrichtung verwendet.

EP 0 496 231 A2

Rank Xerox (UK) Business Services

Die Erfindung betrifft ein Verfahren zum Herstellen längsnahtgeschweißter Metallrohre, bei dem ein Metallband von einer Vorratsspule abgezogen und allmählich zu einem Schlitzrohr geformt, und das Schlitzrohr mit einem Laserstrahl verschweißt wird.

Für das Verschweißen der Längskanten von Rohren sind verschiedene Schweißverfahren wie Widerstandsschweißen, Autogenschweißen, Hochfrequenzschweißen, Induktionsschweißen, Lichtbogenschweißen und in letzter Zeit auch Laserschweißen bekannt geworden. Für eine hohe Schweißnahtqualität ist es erforderlich, daß die zu verschweißenden Kantenbereiche frei von Fett und an dem Fett anhaftenden Schmutzpartikeln sind. Dies gilt ganz besonders für das Lichtbogenschweißen.

Es ist deshalb bekannt, das zu verschweißende Metallband vor der Formung zum Schlitzrohr zu reinigen. Dazu wird das Metallband zunächst durch ein Bad mit einen flüssigen Entfettungsmittel transportiert. Nach dem Austritt aus den Bad wird das Metallband durch eine Behandlungszone geführt, in welcher das Entfettungsmittel als Dampf vorliegt, der auf der kalten Oberfläche des Metallbandes kondensiert. Zur Intensivierung der Reinigung wird der Dampf unter einem Winkel auf die Bandoberfläche gestrahlt. Als Entfettungsmittel haben sich chlorierte Kohlenwasserstoffe wie Perchlorethylen und Trichlorethylen als besonders geeignet erwiesen. Wegen der gesundheitsschädlichen Wirkung dieser Stoffe ist der sogenannte MAK-Wert (mittlere Arbeitsplatz Konzentration) soweit herabgesetzt worden, daß er nur mit erheblichem Aufwand eingehalten werden kann. Die Entsorgung des verbrauchten mit Fett und Schmutz gesättigten Entfettungsmittels ist kostenträchtig, da dieses als Sondermüll entsorgt werden muß (DE-AS 1 272 079).

Der vorliegenden Erfindung liegt von daher die Aufgabe zugrunde, ein Verfahren zum Herstellen von längsnahtgeschweißten Metallrohren bereitzustellen, bei dem auf eine aufwendige Bandentfettung mit chlorierten Kohlenwasserstoffen verzichtet werden kann, ohne daß Nachteile bezüglich der Schweißnahtqualität zu befürchten sind.

Diese Aufgabe wird dadurch gelöst, daß ein an seinen Längskanten besäumtes gefettetes Metallband zum Schlitzrohr geformt und zumindest die einander gegenüberliegenden Bandkantenbereiche vor dem Verschweißen auf eine solche Temperatur erhitzt werden, daß das Fett an der Bandoberfläche verdampft.

Völlig überraschend hat sich gezeigt, daß eine aufwendige Flüssig- oder Dampfentfettung zur Erzielung einer einwandfreien Schweißnaht nicht erforderlich ist, daß vielmehr ein Verdampfen der an dem Metallband anhaftenden Fettanteile ausreichend ist, um die zu verschweißenden Bandkantenbereiche genügend zu reinigen. Die entstehenden Fettdämpfe sollten zweckmäßigerweise abgesaugt werden.

Nach einer besonders vorteilhaften Ausgestaltung der Erfindung erfolgt das Erhitzen der Bandkantenbereiche durch den für das Schweißen verwendeten Laserstrahl. Eine zusätzliche Wärmequelle kann damit entfallen. Durch Wärmeleitung entgegen der Durchlaufrichtung des Bandes wird bei nicht zu hoher Durchlaufgeschwindigkeit des Bandes das Bandmaterial vor dem Schweißpunkt auf eine genügend hohe Temperatur erhitzt, damit das Fett verdampfen kann.

Wesentlich für die Erfindung ist, daß der Laserstrahl dem Nahtverlauf entsprechend geführt wird. Das ist zur Erzielung einer qualitativen Schweißnaht erforderlich, da die Ausbildung der Formwerkzeuge einen zu jeder Zeit geradlinigen Verlauf des zu verschweißenden Schlitzes nicht gewährleisten kann.

Die Erfindung betrifft weiterhin ein Verfahren zum Herstellen längsnahtgeschweißter Metallrohre, bei dem ein Metallband von einer Vorratsspule abgezogen und allmählich zu einem Schlitzrohr geformt, und das Schlitzrohr mit einem elektrischen Lichtbogen verschweißt wird.

Bei diesem Verfahren ist es von großer Bedeutung, daß dem Schweißpunkt vollkommen fettfreie Bandkantenbereiche zugeführt werden. Zur Lösung dieser Aufgabe wird das Metallband im Bereich seiner Bandkanten mit einem vor der Schweißstelle angeordneten Laser mindestens bis zur Verdampfungstemperatur von auf der Metallbandoberfläche vorhandenen Fettrückständen erhitzt. Mit besonderem Vorteil wird ein Festkörperlaser verwendet. Bei Festkörperlasern handelt es sich um Vorrichtungen, die wegen der bedeutend geringeren Anforderungen wesentlich preiswerter sind, als z.B. $CO_2$-Laser oder YAG-Laser. Zweckmäßigerweise wird der Laser nicht voll fokussiert. Dadurch wird ein relativ breiter Bereich der Bandkanten überstrahlt und entfettet.

Die erfindungsgemäßen Verfahren sind insbesondere geeignet, Rohre aus Bandmaterial herzustellen, welches aus einem Metall besteht, das zur Korrosion neigt und aus diesem Grunde bereits werksseitig mit einem Fettfilm zum Schutz gegen Witterungseinflüsse bzw. Kaltverschweißen versehen wird. Als Beispiele sehen hier normaler Stahl und Aluminium genannt. Die Verfahren sind jedoch gleichermaßen geeignet für die Herstellung von Rohren aus nicht oder kaum zur Korrosion neigenden Metallen wie z. B. Edelstahl. Bei diesem Material ist es erforderlich, wenn Rohre mit einem Verhältnis von Durchmesser zur Wanddicke von weniger als 15 hergestellt werden sollen, daß die Formwerkzeuge und oder das Band vor der Formung zum Schitzrohr eingefettet werden. Das Einfetten soll ein Anfressen des Edelstahlbandes an die Formwerkzeuge verhindern.

Die Erfindung ist anhand des in der Figur schematisch dargestellten Ausführungsbeispiels näher erläutert.

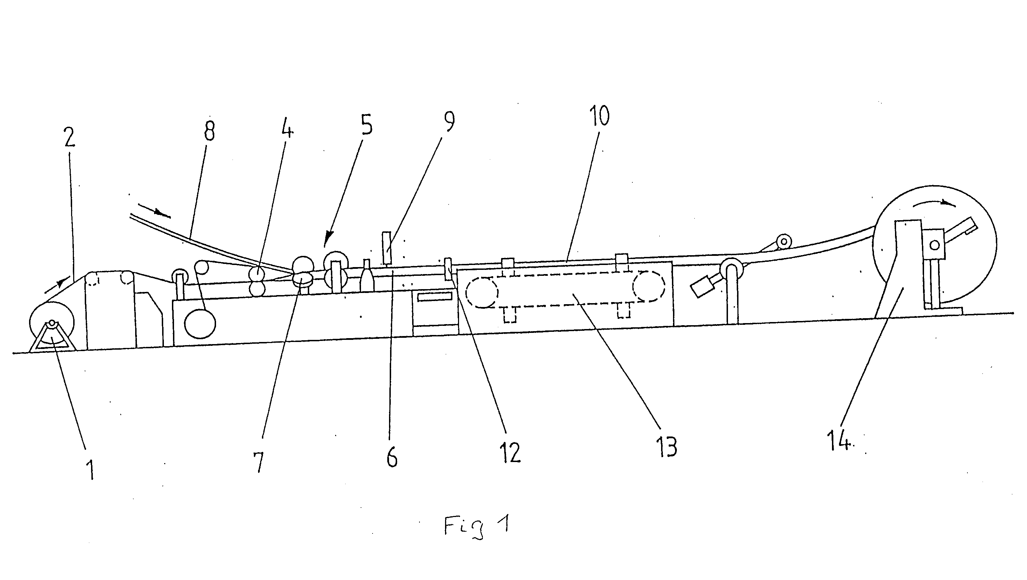

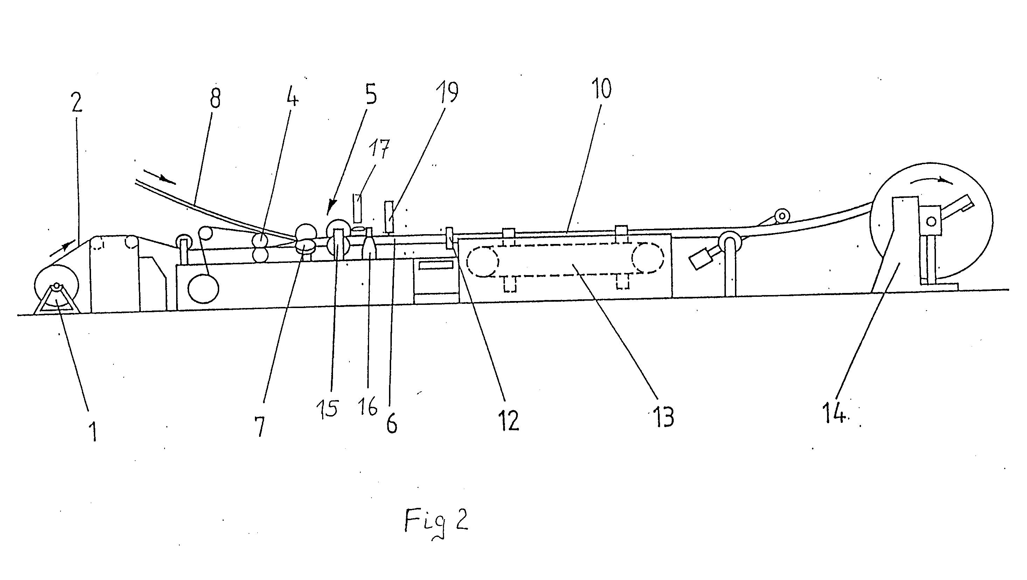

Die Figuren 1 und 2 zeigen eine seitliche Ansicht von zwei Vorrichtungen, wie sie für das erfindungsgemäße Verfahren einsetzbar sind.

Von einem Bandablauf 1 wird ein Stahlband 2 abgezogen und einer Besäumungseinrichtung 4 zugeführt, in welcher die Bandkanten beschnitten werden. Das Stahlband 2 gelangt unbehandelt, d. h. versehen mit den vom Stahlbandhersteller werksseitig aufgebrachten Fettfilm in eine Formeinrichtung 5, in welcher das Stahlband 2 in mehreren Stufen zum Schlitzrohr 6 geformt wird. Die erste Formstufe 7 ist ein Rollenwerkzeug, wogegen die nachfolgenden Formstufen konusartig geformte Rohre und dahinter angeordnete Ringe sind. Vor der ersten Formstufe 7, in welcher in der Regel den Bandkantenbereichen die Krümmung des fertigen Rohres eingeformt wird, kann eine Kabelseele 8 z. B. Lichtwellenleiter in das noch offene Schlitzrohr eingelegt werden. Die Position 8 kann jedoch auch ein Metallrohr sein, welches in nicht dargestellter Weise konzentrisch zum Schlitzrohr 6 gelagert ist. Der Ringspalt zwischen dem Metallrohr und dem längsnahtgeschweißten Rohr kann mit einem salbstschäumenden Kunststoff auf der Basis von Polyurethan ausgeschäumt werden. Ein solches Verfahren ist an sich aus der DE-PS 17 79 406 bekannt.

Nach dem Austritt aus der Formeinrichtung 5 wird das Schlitzrohr 6 unter einer Schweißeinrichtung 9 hindurchgeführt. Das geschweißte Rohr 10 kann mittels eines Ziehringes 12 in seinem Durchmesser reduziert werden. Als Abzugseinrichtung dient ein sogenannter Spannzangenabzug 13, der aus einer Vielzahl von das Rohr 10 fassenden und wieder freigebenden Spannzangenpaaren besteht, die an einer endlosen angetriebenen Kette befestigt sind. Das fertige Produkt kann dann auf eine Vorratsspule 14 aufgewickelt werden.

Wenn wärmeisolierte Leitungsrohre gemäß der DE-PS 17 79 406 gefertigt werden sollen, entfällt der Ziehring 12 und hinter dem Spannzangenabzug 13 befindet sich eine nicht dargestellte kontinuierliche Welleinrichtung.

Bei der Schweißeinrichtung 9 handelt es sich um eine Laserschweißeinrichtung. Die zugeführte Schweißenergie und die Abzugsgeschwindigkeit für das Rohr 10 sind nun so aufeinander abgestimmt, daß die dem Schweißpunkt zugeführte Wärme sich aufgrund des Wärmeleitvermögens des Stahlbandes 2 entgegen der Fertigungsrichtung ausbreitet und die Bandkantenbereiche des Schlitzrohres 6 vor dem Schweißpunkt auf eine Temperatur erwärmt, die ausreicht, den auf dem Stahlband 2 befindlichen Fettfilm zu verdampfen. Durch eine nicht dargestellte Absaugung werden die Öl- bzw. Fettdämpfe entfernt. Die dem Schweißpunkt zugeführten Bandkantenbereiche sind weitestgehend fettfrei und lassen sich problemlos verschweißen. Die Laserschweißvorrichtung ist so ausgestaltet, daß der Laserstrahl dem Verlauf des Längsschlitzes am Schlitzrohr 6 folgt. Diese Vorgehensweise ist an sich bekannt und braucht nicht näher erläutert zu werden.

Bei dem Alternativvorschlag der Erfindung - siehe Figur 2 - ist mit 19 eine Schutzgasschweißeinrichtung mit z.B. einer nichtabschmelzenden Wolframelektrode bezeichnet. Die Bandkantenbereiche des Metallbandes 2 werden vor der Schweißeinrichtung 19 mit einem Festkörperlaser 17 bestrahlt und dabei auf ca. 500° C aufgeheizt. Bei dieser hohen Temperatur verdampfen alle Fettbestandteile des auf dem Metallband 2 befindlichen Korrosionsschutzfilms. Auch bei dieser Alternative ist eine Absaugung der Fettdämpfe sinnvoll bzw. notwendig. Der Auftreffpunkt des Laserstrahls ist, falls das Schlitzrohr in der letzten Formstufe - üblicherweise ist dies ein Formring 16 - geschmiert werden muß, um ein "Anfressen" zu vermeiden, zwischen dem Formring 16 und der Schweißvorrichtung 19. Bei Metallbändern, für die eine Schmierung während der Formung zum Schlitzrohr nicht erforderlich ist, wird man den Auftreffpunkt zwischen dem letzten Rollenpaar 15 und dem Ziehring 16 vorsehen. Die durch den Laserstrahl vorgenommenre Bandkantenvorwärmung hat neben den sich aus der Aufgabenstellung ergebenden Vorteilen noch den Vorteil, daß die Schweißgeschwindigkeit erhöht werden kann. Der Festkörperlaser wird nicht auf einem Punkt fokussiert, sondern auf eine Kreisfläche, so daß ein größerer Bereich überstrahlt wird.

Wird ein Edelstahlband verwendet, welches aufgrund seiner Korrosionsbeständigkeit werksseitig nicht eingefettet wird, so besteht die Gefahr, daß insbesondere bei Edelstahlbändern mit einem kleinen Verhältnis von Bandbreite zu Wanddicke, also einem Band, welches der Herstellung von dickwandigen Rohren mit geringem Durchmesser dient, das Edelstahlband 2 an den metallischen Formrollen der ersten Formstufe 7 anfrißt. In dieser Formstufe, in welcher nur den Randbereichen des Bandes eine starke Krümmung erteilt wird, sind die Verformungskräfte so hoch, daß ohne eine Schmierung des Bandes 2 oder der Rollen der Formstufe 7 eine Fertigung nicht möglich ist. Auch dieser Fettfilm kann durch die erfindungsgemäßen Verfahren problemlos verdampft werden. Von daher schafft die Erfindung eine Möglichkeit, dickwandige Edelstahlrohre kleinen Durchmessers mit einer einwandfreien Schweißnaht herzustellen.

Beim Schweißen von Edelstahlrohren mit einem Außendurchmesser von ca. 3 mm und einer Wanddicke von ca. 0,2 mm für LWL-Unterwasserkabel würde sich das erfindungsgemäße Verfahren aus folgendem Grund empfehlen.

Die Schweißgeschwindigkeit bei einem 1,5 Watt-Laser für Bänder von 0,2 mm Wanddicke liegt bei etwa 6,5 m/min. Eine Laserschweißung hat den Vorteil, daß ein Laser bei den zu erwartenden langen Fertigungszeiten keinen Veränderungen unterliegt. Beim WIG-Schweißen neigt die Elektrode durch immer vorhandene Reste von organischen Stoffen, z.B. Öl, Fett, Schmutz zum Abbrand. Üblicherweise hält eine dünne Wolframelektrode einige Stunden. Ein Vorteil des WIG-Schweißens liegt jedoch darin, daß die Schweißgeschwindigkeiten beim Schweißen derart dünner Bänder erheblich höher ist, da die Energiedichte des Lichtbogens und die dadurch entstehenden Temperaturen höher sind. Da diese Wanddicken mit Schweißstromstärken von 20 A bis 70 A geschweißt werden, ist der Lichtbogen instabil und kann durch äußere Einflüsse, z.B. Luftzug, Fett oder ähnliches abgelenkt werden. Wenn, wie bei der Erfindung, durch eine Laserquelle die zu verschweißenden Bandkanten gereinigt und vorgewärmt werden, also für den nachfolgenden Lichtbogen voraktiviert sind, ist der Lichtbogen völlig überraschend auch bei geringeren Stromstärken erheblich stabiler und die Lebensdauer der Elektrode steigt. Ein Rohr von z.B. 3 mm Durchmesser mit einer Wanddicke von 0,2 mm aus rostfreiem Stahl kann entsprechend der Lehre der Erfindung mit Geschwindigkeiten von 20 m/min verläßlich geschweißt werden.

Mit Laser allein wären nur Schweißgeschwindigkeiten von in etwa 6,5 m/min erreichbar. Beim WIG-Schweißen ohne Reinigung und Vorwärmung der Bandkanten wären zwar Geschwindigkeiten von 20 m/min erreichbar, jedoch treten wegen des instabilen Lichtbogens Schweißfehler und ein verstärkter Abbrand der Elektrode auf. Große Längen sind damit nicht fehlerfrei herzustellen.

**Patentansprüche**

1. Verfahren zum Herstellen längsnahtgeschweißter Metallrohre, bei dem ein Metallband von einer Vorratsspule abgezogen und allmählich zu einem Schlitzrohr geformt und das Schlitzrohr mit einem Laserstrahl verschweißt wird, dadurch gekennzeichnet, daß ein an seinen Längskanten besäumtes gefettetes Metallband zum Schlitzrohr geformt und zumindest die einander gegenüberliegenden Bandkantenbereiche vor dem Verschweißen auf eine solche Temperatur erhitzt werden, daß das Fett an der Bandoberfläche verdampft.

2. Verfahren nach Anspruch 1, dadurch gekennzeichnet, daß das Erhitzen der Bandkantenbereiche durch den für das Schweißen verwendeten Laserstrahl erfolgt.

3. Verfahren nach Anspruch 1 oder 2, dadurch gekennzeichnet, daß der Laserstrahl dem Nahtverlauf entsprechend geführt wird.

4. Verfahren zum Herstellen längsnahtgeschweißter Metallrohre, bei dem ein Metallband von einer Vorratsspule und allmählich zu einem Schlitzrohr geformt, und das Schlitzrohr mit einem elektrischen Lichtbogen verschweißt wird, dadurch gekennzeichnet, daß das Metallband im Bereich seiner Bandkanten mit einem vor der Schweißstelle angeordneten Laser mindestens bis zur Verdampfungstemperatur von auf der Metallbandoberfläche vorhandenen Fettrückstanden erhitzt wird.

5. Verfahren nach Anspruch 4, dadurch gekennzeichnet, daß ein Festkörperlaser verwendet wird.

6. Verfahren nach Anspruch 4 oder 5, dadurch gekennzeichnet, daß der Laser nicht voll fokussiert wird.

7. Verfahren nach einem der Ansprüche 1 bis 6, dadurch gekennzeichnet, daß aus einem Band aus Edelstahl ein Schlitzrohr mit einem Verhältnis von Durchmesser zu Wanddicke von weniger als 15 hergestellt wird, wobei das Edelstahlband vor der Formung zum Schlitzrohr und/oder die Verformungsmittel gefettet wird.

Fig 1

EP 0 496 231 A2

Fig 2